# EUROPEAN PATENT APPLICATION

(11) **EP 4 040 044 A1**
(43) Date of publication of application: **10.08.2022**
(21) Application number: 22154146.9
(22) Date of filing: 31.01.2022
(51) Int. Cl.: F21V 8/00, G02F 1/13357, G02F 1/1335, G02B 6/00

(54) **LIGHTING APPARATUS**

(30) Priority: 05.02.2021 CN 202120340641 U; 05.02.2021 CN 202120340297 U; 05.02.2021 CN 202120339032 U
(71) Applicant: Leedarson Lighting Co., Ltd, Changtai Zhangzhou, Fujian 363999 (CN)
(72) Inventor: WANG, Tingyan, Zhangzhou, 363999 (CN); DONG, Yongzhe, Zhangzhou, 363999 (CN); ZHANG, Jiansheng, Zhangzhou, 363999 (CN); BAI, Xingchen, Zhangzhou, 363999 (CN); CAI, Lubin, Zhangzhou, 363999 (CN); HUANG, Chaowei, Zhangzhou, 363999 (CN); LIU, Guanyinlian, Zhangzhou, 363999 (CN); LIN, Huiju, Zhangzhou, 363999 (CN)
(74) Representative: Di Biase, Fabio

(57) **Abstract**

A lighting apparatus includes a bottom plate (1), a first light source (2), a light guide plate (32) and a frame (4). The bottom plate has a first folding edge (11), a second folding edge (11), a third folding edge (14) and a fourth folding edge (14). The first folding edge and the second folding edge (11) are on two first opposite ends of the bottom plate (1). The third folding edge and the fourth folding edge (14) are on two second opposite ends of the bottom plate (1). The first light source (2) is attached to the first folding edge (11). The light guide plate (32) engages the third folding edge and the fourth folding edge (14) to align a first light entrance side of the light guide plate (32) to the first light source (2). The frame (4) is attached to the bottom plate (1).

## Description

### FIELD

The present invention is related to a lighting apparatus, and more particularly related to a lighting apparatus with a compact frame structure.

### BACKGROUND

The time when the darkness is being lighten up by the light, human have noticed the need of lighting up this planet. Light has become one of the necessities we live with through the day and the night. During the darkness after sunset, there is no natural light, and human have been finding ways to light up the darkness with artificial light. From a torch, candles to the light we have nowadays, the use of light have been changed through decades and the development of lighting continues on.

Early human found the control of fire which is a turning point of the human history. Fire provides light to bright up the darkness that have allowed human activities to continue into the darker and colder hour of the hour after sunset. Fire gives human beings the first form of light and heat to cook food, make tools, have heat to live through cold winter and lighting to see in the dark.

Lighting is now not to be limited just for providing the light we need, but it is also for setting up the mood and atmosphere being created for an area. Proper lighting for an area needs a good combination of daylight conditions and artificial lights. There are many ways to improve lighting in a better cost and energy saving. LED lighting, a solid-state lamp that uses light-emitting diodes as the source of light, is a solution when it comes to energy-efficient lighting. LED lighting provides lower cost, energy saving and longer life span.

The major use of the light emitting diodes is for illumination. The light emitting diodes is recently used in light bulb, light strip or light tube for a longer lifetime and a lower energy consumption of the light. The light emitting diodes shows a new type of illumination which brings more convenience to our lives. Nowadays, light emitting diode light may be often seen in the market with various forms and affordable prices.

After the invention of LEDs, the neon indicator and incandescent lamps are gradually replaced. However, the cost of initial commercial LEDs was extremely high, making them rare to be applied for practical use. Also, LEDs only illuminated red light at early stage. The brightness of the light only could be used as indicator for it was too dark to illuminate an area. Unlike modern LEDs which are bound in transparent plastic cases, LEDs in early stage were packed in metal cases.

In 1878, Thomas Edison tried to make a usable light bulb after experimenting different materials. In November 1879, Edison filed a patent for an electric lamp with a carbon filament and keep testing to find the perfect filament for his light bulb. The highest melting point of any chemical element, tungsten, was known by Edison to be an excellent material for light bulb filaments, but the machinery needed to produce super-fine tungsten wire was not available in the late 19th century. Tungsten is still the primary material used in incandescent bulb filaments today.

Early candles were made in China in about 200 BC from whale fat and rice paper wick. They were made from other materials through time, like tallow, spermaceti, colza oil and beeswax until the discovery of paraffin wax which made production of candles cheap and affordable to everyone. Wick was also improved over time that made from paper, cotton, hemp and flax with different times and ways of burning. Although not a major light source now, candles are still here as decorative items and a light source in emergency situations. They are used for celebrations such as birthdays, religious rituals, for making atmosphere and as a decor.

Illumination has been improved throughout the times. Even now, the lighting device we used today are still being improved. From the illumination of the sun to the time when human can control fire for providing illumination which changed human history, we have been improving the lighting source for a better efficiency and sense. From the invention of candle, gas lamp, electric carbon arc lamp, kerosene lamp, light bulb, fluorescent lamp to LED lamp, the improvement of illumination shows the necessity of light in human lives.

There are various types of lighting apparatuses. When cost and light efficiency of LED have shown great effect compared with traditional lighting devices, people look for even better light output. It is important to recognize factors that can bring more satisfaction and light quality and flexibility.

Light devices are widely used in different places. For panel light devices, it is important to keep the assembly of components more easily and flexible.

For example, users or manufacturers may need to replace components to other settings. In addition, the arrangement of components needs to consider safety and simplicity.

### SUMMARY

In some embodiments, a lighting apparatus includes a bottom plate, a first light source, a light guide plate and a frame.

The bottom plate has a first folding edge, a second folding edge, a third folding edge and a fourth folding edge.

The first folding edge and the second folding edge are on two first opposite ends of the bottom plate.

The third folding edge and the fourth folding edge are on two second opposite ends of the bottom plate.

The first light source is attached to the first folding edge.

The light guide plate engages the third folding edge and the fourth folding edge to align a first light entrance side of the light guide plate to the first light source.

The frame is attached to the bottom plate.

The frame surrounds the light guide plate and a first light of the first light source is guided by the light guide plate to escape from a light opening defined by the frame.

In some embodiments, a second light source is attached to the second folding edge of the bottom plate.

A second light entrance side of the light guide plate is aligned to the second light source to guide a second light of the second light source to escape from the light opening.

In some embodiments, the lighting apparatus may also include a diffusion layer covering the light guide plate to diffuse the first light.

In some embodiments, the lighting apparatus may also include a reflective layer for reflecting the first light toward the light guide plate to escape from the diffusion layer.

The reflective layer and the diffusion layer are disposed on two opposite sides of the light guide plate.

In some embodiments, the reflective layer, the diffusion layer and the light guide plate are combined with the bototm plate as an integrated module, separable from the frame.

In some embodiments, the first light source is also integrated in the integrated module.

In some embodiments, the lighting apparatus may also include a terminal disposed on an external side of the bottom plate.

The first light source is placed on an inner side of the bottom plate.

A conductive path is disposed on the bottom plate to electrically connect the first light source to the terminal.

In some embodiments, the conductive path includes a connecting wire.

In some embodiments, a anti-pulling unit is fixed to the bottom plate for preventing a pulling of the terminal to move the connecting wire.

In some embodiments, the lighting apparatus may also include a driver module.

The driver module is detachably connecting to the terminal for converting an external power to a driving current supplied to the first light source.

In some embodiments, the terminal has a type structure associated with one of multiple parameter settings.

There are multiple types of driver modules corresponding to the multiple parameter settings.

The type structure prevents an incompatible driver module to attach to the terminal.

In some embodiments, the type structure is a physical structure corresponding to the associated parameter setting.

In some embodiments, the type structure includes an electronic unit for indicating the driver module a light parameter of the first light source.

In some embodiments, the bottom plate has a concave groove occupying a portion of the external side of the bottom plate.

In some embodiments, the driver is placed on the concave groove.

In some embodiments, the bottom plate has a guiding track on the concave groove for inserting the driver module to attach the driver module to the bottom plate.

In some embodiments, the frame has a switch container and a switch path.

The switch path electrically connects a switch placed in the switch container to the driver module.

The switch is exposed from the frame to be manually operated by a user to change a light setting of the first light source.

In some embodiments, the frame includes four frame bars.

In some embodiments, the frame further includes four frame edges.

The four frame edges fix the four frame bars to the bottom plate.

In some embodiments, the frame is made of metal material.

The frame is thermally connected to the first light source via a thermal bar.

### BRIEF DESCRIPTION OF DRAWINGS

Fig. 1 illustrates an exploded view of a lighting apparatus embodiment.
Fig. 2 illustrates a perspective view of the example after being assembled.
Fig. 3 illustrates anothere exploded view of the example in Fig. 1.
Fig. 4 illustrates an example of a light module.
Fig. 5 illustrates an example of a bottom plate.
Fig. 6 illustrates an anti-pulling unit.
Fig. 7 shows a lighting apparatus embodiment.
Fig. 8 shows another view of the lighting apparatus embodiment.

### DETAILED DESCRIPTION

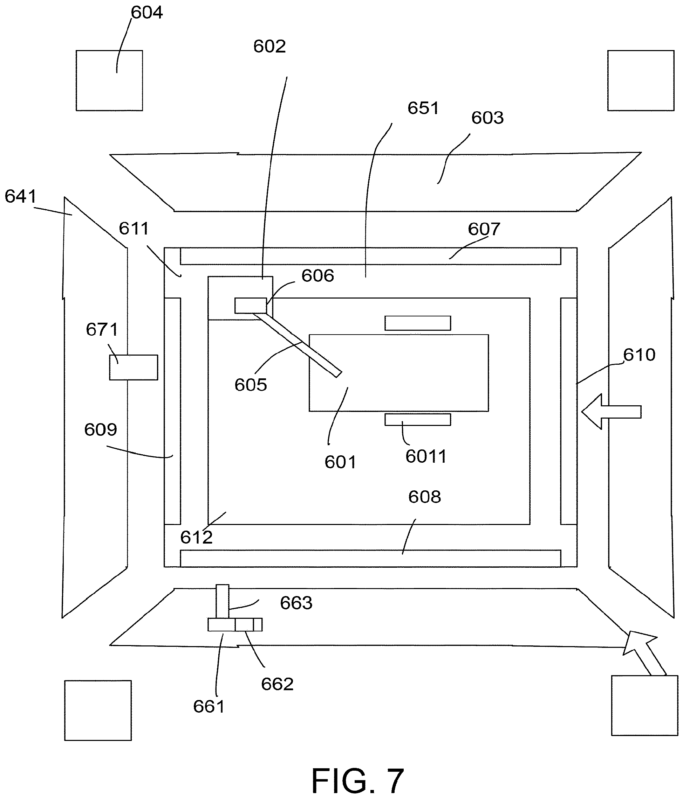

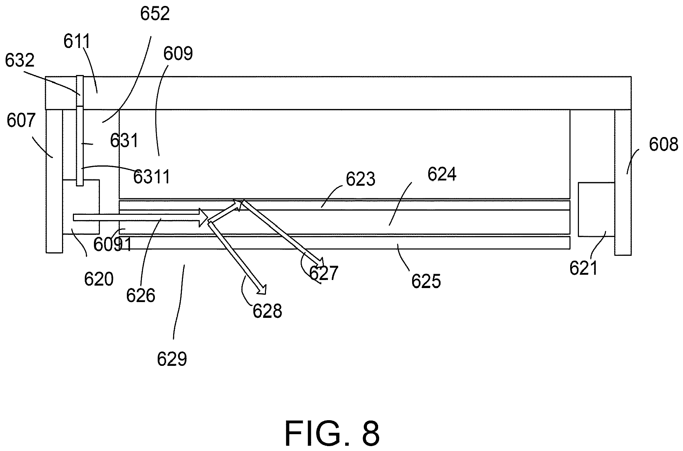

Please refer to Fig. 7 and Fig. 8, which show a top view and a bottom view of a lighting apparatus embodiment. The same reference numerals refer to the same components.

In Fig. 7, the lighting apparatus includes a bottom plate 611, a first light source, a light guide plate and a frame 641.

Fig. 8 shows the first light source 620, which may be a light strip. The light strip may be made by mounting multiple LED modules on an elongated substrate. The multiple LED modules may include multiple types of LED modules, e.g. different color temperatures or different colors. The first light source 620 may be controlled to emit a mixed light with desired color or color temperatures by supplying corresponding driving currents to the different types of LED modules.

In Fig. 8, the first light source 621 is attached to a first folding edge 607 of the bottom plate 611.

In Fig. 8, there is a second light source 621 attached to a second folding edge 608 of the bottom plate 611.

In Fig. 7 and Fig. 8, the bottom plate 611 has a first folding edge 607, a second folding edge 608, a third folding edge 609 and a fourth folding edge 610.

The first folding edge 607 and the second folding edge 608 are on two first opposite ends of the bottom plate 611.

The third folding edge 609 and the fourth folding edge 610 are on two second opposite ends of the bottom plate 611.

The first light source 620 is attached to the first folding edge 607.

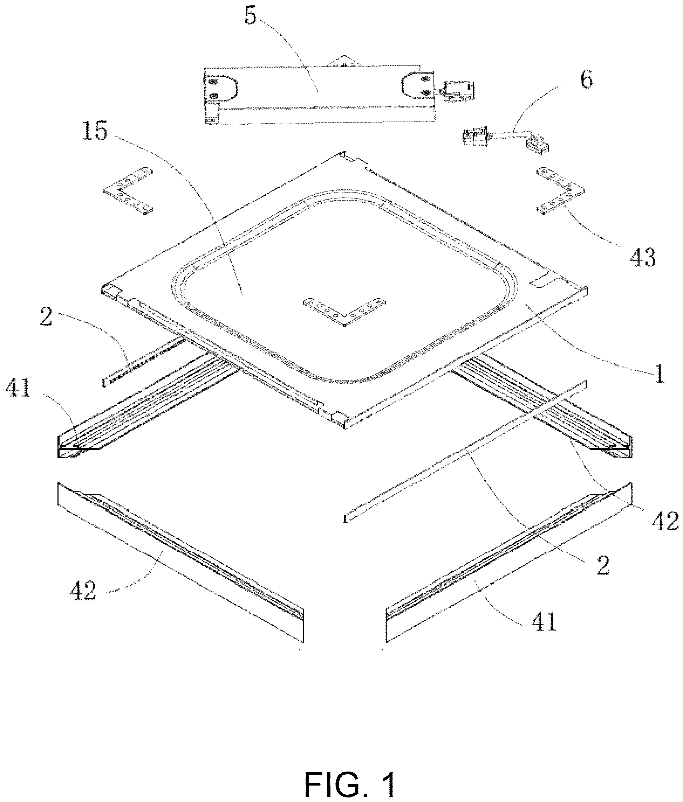

The light guide plate 609 engages the third folding edge 609 and the fourth folding edge 610 to align a first light entrance side 6091 of the light guide plate 609 to the first light source 620. More examples are illustrated in the embodiments in Fig. 1 to Fig. 6.

The frame 641 is attached to the bottom plate 611. Fig. 7 shows the frame 641 having four frame bars 603 to be fixed to the bottom plate 611 with four frame edges 604.

The frame 641 surrounds the light guide plate 611 and a first light 626 of the first light source 620 is guided by the light guide plate 624 to escape with the light direction 628 from a light opening 629 defined by the frame 641.

In some embodiments, a second light source 621 is attached to the second folding edge 608 of the bottom plate 611.

A second light entrance side of the light guide plate 624, similar as the light entrance side 6091 and thus is not repeated again, is aligned to the second light source to guide a second light of the second light source to escape from the light opening 629.

In some embodiments, only one light source is used while in other embodiments, two or more light sources are disposed for providing a more even light distribution.

In some embodiments, the lighting apparatus may also include a diffusion layer 625 covering the light guide plate 624 to diffuse the first light 626.

In some embodiments, the lighting apparatus may also include a reflective layer 623 for reflecting the first light 626 toward the light guide plate, the light direction 627, to escape from the diffusion layer 625.

The reflective layer 624 and the diffusion layer 625 are disposed on two opposite sides of the light guide plate 624.

In some embodiments, the reflective layer 624, the diffusion layer 625 and the light guide plate 624 are combined with the bototm plate 611 as an integrated module, separable from the frame 641.

In some embodiments, the first light source 620 is also integrated in the integrated module. The light module refers to a total unit of the components mentioned above, which is already illustrated in the drawing.

In some embodiments, the lighting apparatus may also include a terminal 602 disposed on an external side 651 of the bottom plate 611.

The first light source 620 is placed on an inner side 652 of the bottom plate 611.

A conductive path 631 is disposed on the bottom plate 611 to electrically connect the first light source 620 to the terminal 602.

In some embodiments, the conductive path 631 includes a connecting wire 6311.

In some embodiments, a anti-pulling unit 632 is fixed to the bottom plate 611 for preventing a pulling of the terminal 602 to move the connecting wire 6311.

In some embodiments, the lighting apparatus may also include a driver module 601.

The driver module 601 is detachably connecting to the terminal 602 for converting an external power to a driving current supplied to the first light source 620.

In some embodiments, the terminal 602 has a type structure 606 associated with one of multiple parameter settings, e.g. a different light intensity parameter or a number of LED modules.

There are multiple types of driver modules corresponding to the multiple parameter settings.

The type structure prevents an incompatible driver module to attach to the terminal.

In some embodiments, the type structure is a physical structure corresponding to the associated parameter setting.

In some embodiments, the type structure includes an electronic unit for indicating the driver module a light parameter of the first light source. For example, the electronic unit may include a tag storing a parameter or a product model number to indicate how to provide a corresponding driving power to the light sources in the connected lighting apparatus.

In some embodiments, the bottom plate 611 has a concave groove 612 occupying a portion of the external side 651 of the bottom plate 611.

In some embodiments, the driver 601 is placed on the concave groove 612.

In some embodiments, the bottom plate 611 has a guiding track 6011 on the concave groove 612 for inserting the driver module 601 to attach the driver module 601 to the bottom plate 611.

In some embodiments, the frame 641 has a switch container 661 and a switch path 663.

The switch path 663 electrically connects a switch 662 placed in the switch container 661 to the driver module 601.

The switch 662 is exposed from the frame 641 to be manually operated by a user to change a light setting of the first light source 620.

In some embodiments, the frame 641 includes four frame bars 603.

In some embodiments, the frame 641 further includes four frame edges 604.

The four frame edges 604 fix the four frame bars 603 to the bottom plate 611.

In some embodiments, the frame is made of metal material.

The frame 641 is thermally connected to the first light source 620 via a thermal bar 671. The thermal bar 671 may be made of metal material to provide a thermal path to deliver heat generated by the first light source 620 to the metal frame.

Please refer to Fig. 1. In Fig. 1, the lighting apparatus embodiment has a driver module 5. There is a terminal 6 with an anti-pulling unit. There are four frame edges 43 for fixing frame bars 41, 42 to the bottom plate 1. The driver module 5 is placed on a concave groove 15 on the bottom plate 1. Two lights sources 2 are attached to the bottom plate 1.

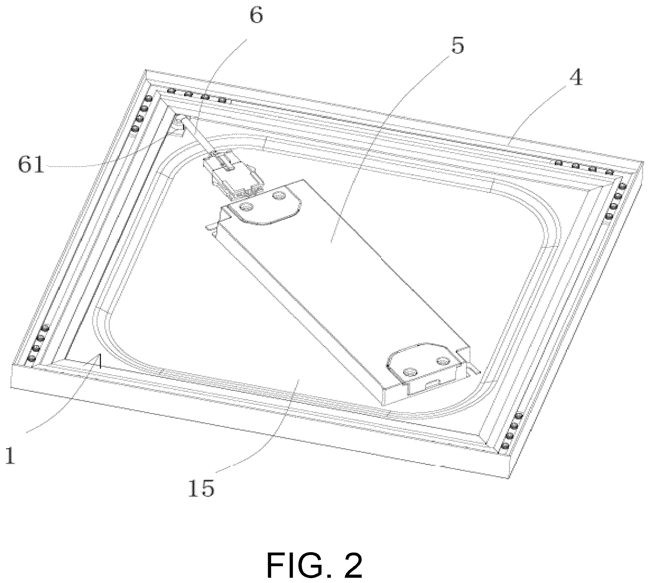

Fig. 2 show an assembled result of the components in Fig. 1. The same reference numerals refer to the same components among drawings. The terminal 6 has an anti-pulling unit 61.

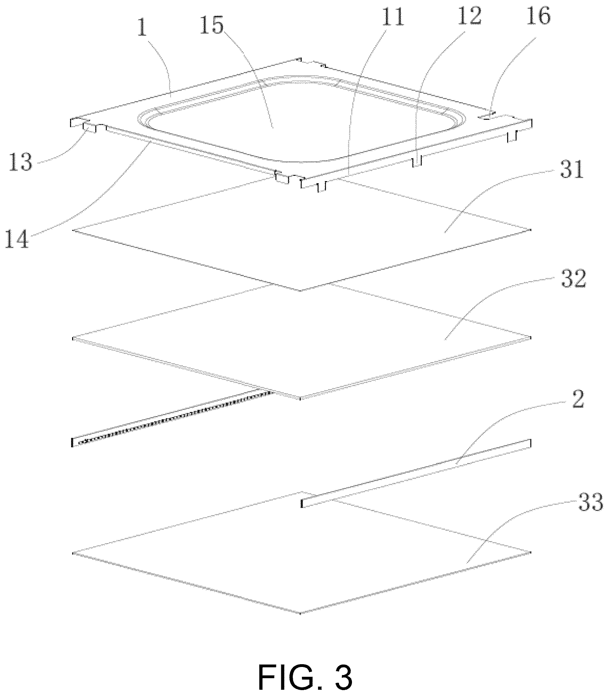

Fig. 3 shows another exploded view of the example in Fig. 1 and Fig. 2.

In Fig. 3, there is a light guide plate 32 to be integrated with a reflective layer 32 and a diffusion layer 33. The bottom plate 1 has a third folding edge 14 and a fourth folding edge on two opposite sides of the bottom plate 1 for aligning the light guide plate 32 to the first light source and the second light source 2.

As mentioned above, there are a third folding edge 11 with protruding pins 12 for attaching the light sources 2.

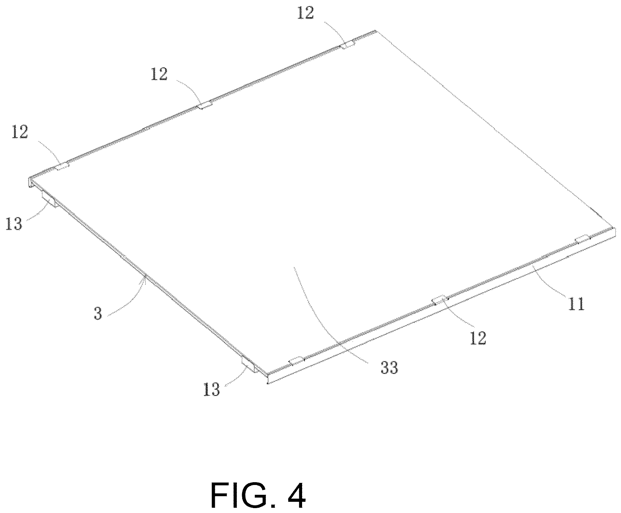

In Fig. 4, the protruding pin 12 is folded again to contain and fix the reflective layer, the light guide plate and the diffusion layer to combine with the bottom plate to be an integrated module.

In Fig. 4, the first folding edge 3 has a protruding pin 13 to be folded to form the integrated module as mentioned above.

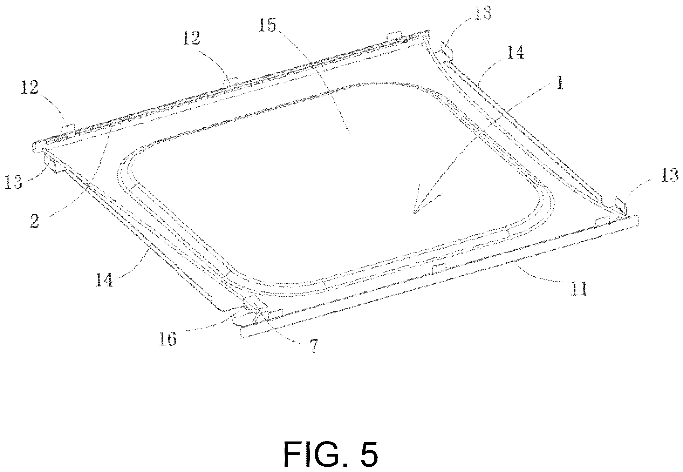

In Fig. 5, a conductive path 16 is disposed on the bottom plate 1 for electrically connecting the light source to a terminal connecting to the driver module mentioned above.

There is an anti-pulling unit 7 for preventing an undesired pulling on the wire which is used as the conductive path.

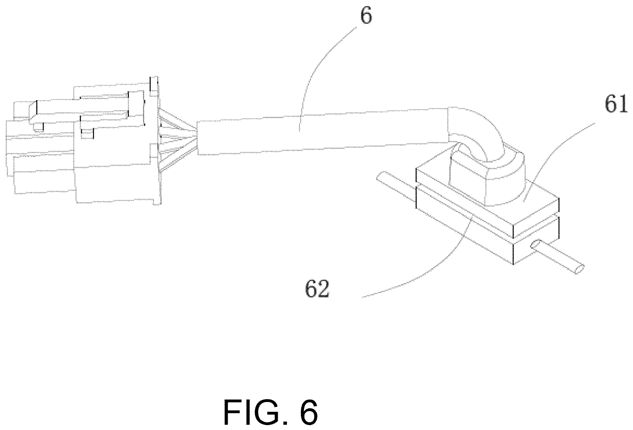

Fig. 6 shows the terminal 6 that has two connecting units 61, 62 as a connector interface to connect to the driver module.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

## Claims

1. A lighting apparatus, comprising:
a bottom plate, wherein the bottom plate has a first folding edge, a second folding edge, a third folding edge and a fourth folding edge, wherein the first folding edge and the second folding edge are on two first opposite ends of the bottom plate, wherein the third folding edge and the fourth folding edge are on two second opposite ends of the bottom plate;
a first light source attached to the first folding edge;
a light guide plate engaging the third folding edge and the fourth folding edge to align a first light entrance side of the light guide plate to the first light source; and
a frame attached to the bottom plate, wherein the frame surrounds the light guide plate and a first light of the first light source is guided by the light guide plate to escape from a light opening defined by the frame.

2. The lighting apparatus of claim 1, wherein a second light source is attached to the second folding edge of the bottom plate, wherein a second light entrance side of the light guide plate is aligned to the second light source to guide a second light of the second light source to escape from the light opening.

3. The lighting apparatus of claim 1, further comprising a diffusion layer covering the light guide plate to diffuse the first light.

4. The lighting apparatus of claim 3, further comprising a reflective layer for reflecting the first light toward the light guide plate to escape from the diffusion layer, wherein the reflective layer and the diffusion layer are disposed on two opposite sides of the light guide plate.

5. The lighting apparatus of claim 4, wherein the reflective layer, the diffusion layer and the light guide plate are combined with the bototm plate as an integrated module, separable from the frame.

6. The lighting apparatus of claim 5, wherein the first light source is also integrated in the integrated module.

7. The lighting apparatus of claim 1, further comprising a terminal disposed on an external side of the bottom plate, wherein the first light source is placed on an inner side of the bottom plate, wherein a conductive path is disposed on the bottom plate to electrically connect the first light source to the terminal.

8. The lighting apparatus of claim 7, wherein the conductive path comprises a connecting wire.

9. The lighting apparatus of claim 8, wherein a anti-pulling unit is fixed to the bottom plate for preventing a pulling of the terminal to move the connecting wire.

10. The lighting apparatus of claim 7, further comprising a driver module, wherein the driver module is detachably connecting to the terminal for converting an external power to a driving current supplied to the first light source.

11. The lighting apparatus of claim 10, wherein the terminal has a type structure associated with one of multiple parameter settings, wherein there are multiple types of driver modules corresponding to the multiple parameter settings, wherein the type structure prevents an incompatible driver module to attach to the terminal.

12. The lighting apparatus of claim 11, wherein the type structure is a physical structure corresponding to the associated parameter setting.

13. The lighting apparatus of claim 11, wherein the type structure comprises an electronic unit for indicating the driver module a light parameter of the first light source.

14. The lighting apparatus of claim 10, wherein the bottom plate has a concave groove occupying a portion of the external side of the bottom plate.

15. The lighting apparatus of claim 14, wherein the driver is placed on the concave groove.
